**Europäisches Patentamt**

**European Patent Office**

**Office européen des brevets**

(11) Numéro de publication : **0 487 395 A1**

# (12) DEMANDE DE BREVET EUROPEEN

(21) Numéro de dépôt : **91403091.1**

(22) Date de dépôt : **18.11.91**

(51) Int. Cl.⁵ : **B29C 47/64,** B29C 47/60

(30) Priorité : **21.11.90 FR 9014543**

(43) Date de publication de la demande :
**27.05.92 Bulletin 92/22**

(84) Etats contractants désignés :
**AT BE CH DE DK ES FR GB GR IT LI LU NL SE**

(71) Demandeur : **CONDITIONNEMENT ET INDUSTRIE S.A.**
**Route de Broglie**
**F-27300 Bernay (FR)**

(72) Inventeur : **Henry, Amédée J. P.**
**Hameau de Troubille**
**F-27350 Routot (FR)**

(74) Mandataire : **Dronne, Guy et al**
**Cabinet BEAU de LOMENIE, 55, rue d'Amsterdam**
**F-75008 Paris (FR)**

(54) **Vis d'extrudeuse pour le polyéthylène.**

(57)    L'invention concerne une vis d'extrudeuse utilisable aussi bien avec du polyéthylène linéaire qu'avec du polyéthylène radicalaire.

La vis pour extrudeuse pour extruder du polyéthylène linéaire et/ou radicalaire comprend un arbre (42) sur lequel sont réalisées une première portion en hélice (48), une portion médiane formant un mélangeur intermédiaire (50), une deuxième portion en hélice (54) et une portion terminale formant un mélangeur de sortie (56). L'ensemble desdites portions formant hélice (48, 54) présente un taux de compression compris entre 1 et 1,5.

fig_2

EP 0 487 395 A1

La présente invention concerne une vis d'extrudeuse pour le polyéthylène.

De façon plus précise, l'invention concerne une vis pour extrudeuse qui soit utilisable aussi bien avec le polyéthylène linéaire qu'avec le polyéthylène radicalaire tout en conservant dans les deux cas aux films obtenus des caractéristiques mécaniques élevées.

Le polyéthylène est le polymère de synthèse le plus utilisé actuellement, notamment pour réaliser par extrusion le soufflage des films pour l'emballage ou des récipients tels que des bouteilles, etc.

On sait qu'il existe deux types de polyéthylènes utilisés dans l'industrie. Le polyéthylène radicalaire ou basse densité ou encore haute pression est un polymère très ramifié. Le polyéthylène linéaire ou haute densité ou encore basse pression a des chaînes très peu ramifiées. Ce dernier a un point de ramollissement plus élevé que le radicalaire, il est très peu perméable au gaz, il présente une très grande inertie chimique et une résistance mécanique bien plus grande que le radicalaire.

Cependant, le polyéthylène radicalaire est le plus utilisé actuellement car il est le plus facile à travailler avec les extrudeuses disponibles. En revanche, ces mêmes extrudeuses ont des rendements beaucoup plus faibles lorsqu'elles sont utilisées avec du polyéthylène linéaire ou avec du polyéthylène radicalaire comportant un pourcentage notable de polyéthylène linéaire. En fait, ces rendements sont suffisamment bas pour que la production de films soufflés avec du linéaire soit peu rentable en raison du trop faible débit des machines.

Or le polyéthylène linéaire présente, comme on l'a déjà indiqué, des propriétés, notamment mécaniques, bien supérieures à celles du polyéthylène radicalaire. Il y aurait donc un intérêt économique évident à mettre au point des extrudeuses pouvant travailler dans de bonnes conditions économiques aussi bien avec du polyéthylène radicalaire que linéaire ou avec des mélanges de ces deux matériaux plastiques.

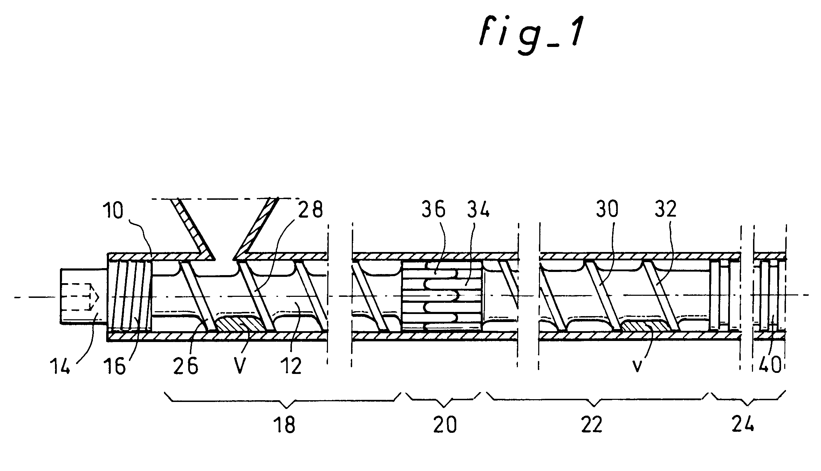

Afin de mieux faire comprendre l'invention, on va décrire une extrudeuse de l'art antérieur en se référant à la figure 1 annexée.

Sur la figure 1, on a représenté l'enveloppe 10 de l'extrudeuse et sa vis 12. La vis 12 comprend une extrémité d'entraînement 14, une zone 16 d'étanchéité à pas inversé, une première zone formant hélice 18, un mélangeur intermédiaire 20, une deuxième zone formant hélice 22 et un mélangeur d'extrémité 24.

Une caractéristique essentielle d'une extrudeuse est le taux de compression de celle-ci. Le taux de compression est le rapport entre le volume V disponible pour le matériau plastique entre les deux premières spires 26 et 28 de l'hélice et le volume $\underline{v}$ disponible pour le matériau plastique entre les deux dernières spires 30 et 32 de l'hélice. Dans les extrudeuses connues le taux de compression est compris entre 4 et 6. En outre, le mélangeur intermédiaire 20 est constitué par une portion cylindrique 34 dans laquelle sont ménagées des cannelures borgnes 36 débouchant alternativement dans l'une et l'autre des faces d'extrémité du cylindre. Un tel mélangeur travaille par laminage du matériau plastique. Le mélangeur d'extrémité 24 est constitué par une série de roues 40 percées de trous à axe curviligne débouchant dans les deux faces de la roue. Un tel mélangeur travaille également par laminage du matériau plastique.

L'extrudeuse décrite ci-dessus, de diamètre 90 mm, a un débit maximal de 200 kg/heure lorsqu'elle est alimentée en polyéthylène radicalaire. Lorsque cette même extrudeuse est alimentée avec du polyéthylène linéaire, le débit tombe à 110 kg/heure, ce qui la rend inutilisable pour un tel produit, ainsi qu'on l'a expliqué précédemment.

Un objet de l'invention est de fournir une vis d'extrudeuse pour polyéthylène qui soit utilisable aussi bien avec le polyéthylène linéaire qu'avec le polyéthylène radicalaire.

Pour atteindre ce but, la vis d'extrudeuse pour polyéthylène, selon l'invention, comprend un arbre sur lequel sont réalisées une première portion en hélice, une portion médiane formant un mélangeur intermédiaire, une deuxième portion en hélice et une portion terminale formant un mélangeur de sortie, et elle se caractérise en ce que l'ensemble des portions formant hélice présente un taux de compression compris entre 1 et 1,5, donc très bas, évitant de ce fait le laminage violent du matériau par reflux entre le listel de la vis et le corps de l'extrudeuse.

Selon une autre caractéristique de l'invention, les mélangeurs sont constitués par une pluralité de turbines.

De toutes façons, l'invention sera mieux comprise à la lecture de la description qui suit d'un mode préféré de réalisation de l'invention donné à titre d'exemple non limitatif. La description se réfère aux dessins annexés sur lesquels :

– la figure 1, déjà décrite, montre en élévation une vis d'extrudeuse pour polyéthylène de type connu ;
– la figure 2 est une vue en élévation d'une vis d'extrudeuse pour polyéthylène selon l'invention ;
– la figure 3 est une vue en coupe verticale selon la ligne III-III de la figure 2 ; et
– la figure 4 est une vue en coupe verticale selon la ligne IV-IV de la figure 2.

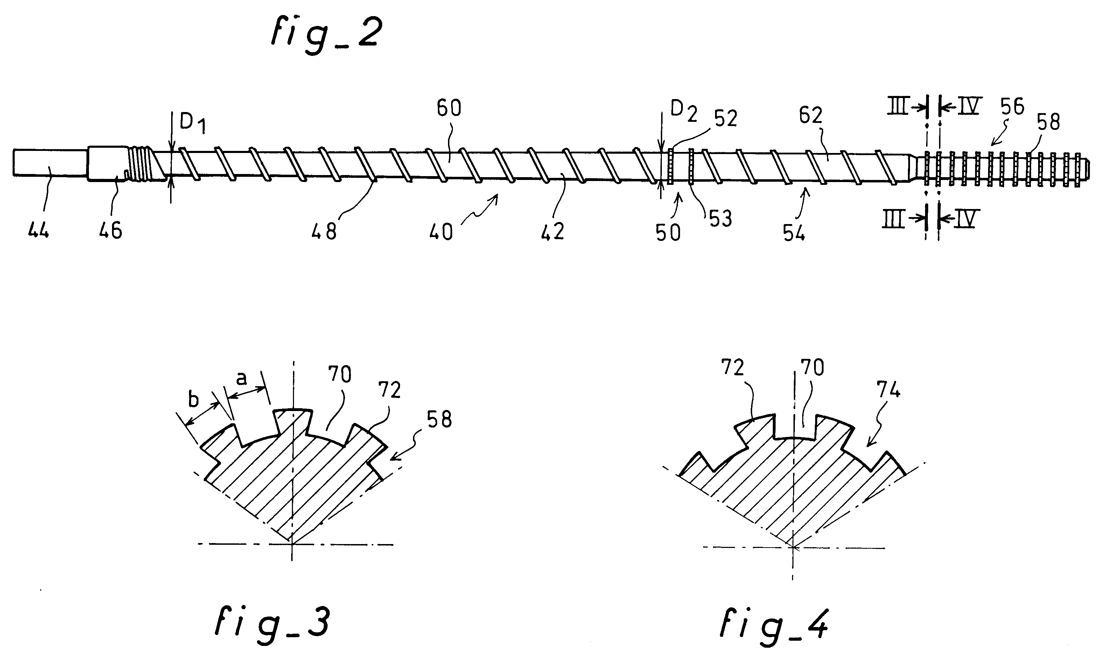

En se référant tout d'abord à la figure 2, on va décrire l'ensemble de la vis d'extrudeuse pour polyéthylène selon l'invention. Sur cette figure, on n'a pas représenté l'enveloppe de l'extrudeuse qui est identique à celle de la figure 1 déjà décrite.

La vis 40 est constituée par un arbre de révolution 42 sensiblement cylindrique sur lequel sont formées les différentes parties de la vis. On trouve d'abord une extrémité 44 d'accouplement au moteur d'entraînement, non représenté sur la figure, puis une portion d'étanchéité 46 formée par une portion d'hélice à pas inversé. On trouve ensuite une première portion d'hélice 48 à pas constant dont la longueur est comprise entre 14 et 15D, D étant le diamètre extérieur de la vis. La vis comprend encore une portion formant mélangeur intermédiaire 50 constituée par deux turbines 52 et 54 dans l'exemple décrit. La structure des turbines sera décrite ultérieurement. Le nombre de turbines formant le mélangeur intermédiaire est compris entre 2 et 4. La longueur du mélangeur intermédiaire 50 est comprise entre 2D et 4D selon le nombre de turbines.

La vis comprend ensuite une deuxième portion formant hélice 54 dont la longueur est comprise entre 6D et 8D. Cette portion d'hélice 54 présente le même pas que la portion d'hélice 48. La vis se termine par un mélangeur d'extrémité 56 qui est constituée par douze à quatorze turbines, chaque turbine étant référencée 58. La longueur du mélangeur d'extrémité est comprise entre 6D et 8D. On obtient ainsi une vis d'extrudeuse dont la longueur utile est de l'ordre de 30D.

Comme le montre la figure 2, la portion d'arbre 60 correspondant à la première portion en hélice 48 est légèrement tronconique. Plus précisément, elle a un diamètre D1, égal à 62 mm dans l'exemple décrit, à sa première extrémité et un diamètre D2, égal à 72 mm dans l'exemple décrit, à sa deuxième extrémité proche de la turbine intermédiaire. Cette conicité de la portion d'arbre 60 définit un taux de compression égal à 1,3. En revanche, dans l'exemple décrit la portion d'arbre 62 correspondant à la deuxième portion d'hélice 54 a un diamètre constant. Le taux global de compression de la vis reste donc égal à 1,3. Plus généralement la totalité de l'arbre de la vis peut présenter une conicité régulière, le taux de compression étant alors défini entre l'extrémité d'entrée de la première hélice 48 et l'extrémité de sortie de la deuxième hélice 54.

La figure 3 montre en coupe verticale partielle une turbine 52, 54 ou 58. La turbine est formée par une roue pleine 70 dont le diamètre extérieur est égal à celui de la vis, c'est-à-dire 90 mm dans l'exemple décrit définissant entre elles des dents. La périphérie de la roue 70 est usinée pour réaliser des échancrures 72 à section droite rectangulaire régulièrement réparties. Dans l'exemple représenté, il y a 10 échancrures. A la périphérie de la roue 70, la largeur a de l'échancrure est égale à la longueur b de la dent. La comparaison entre les figures 3 et 4, qui représente deux roues ou turbines 70 et 74 adjacentes, montre que les échancrures de la roue 74 sont décalées d'un demi-pas angulaire par rapport à celles de la roue 70. L'empilage des turbines 58 constitue donc l'équivalent de chicanes angulairement décalées pour le polyéthylène tout en laissant une section de passage suffisante pour éviter un effet de laminage.

De préférence, les turbines du mélangeur intermédiaire 50 ont la même forme et la même position relative que celles du mélangeur d'extrémité 56.

Les essais effectués avec l'extrudeuse conforme à l'invention montrent qu'on obtient d'aussi bons résultats avec le polyéthylène linéaire qu'avec le polyéthylène radicalaire et que les résultats obtenus avec ce dernier produit sont les mêmes que ceux qui étaient obtenus avec les vis d'extrudeuses de l'état de la technique. L'invention permet donc d'obtenir une extrudeuse qui peut indifféremment être utilisée pour travailler les deux types de polyéthylène ou des mélanges de ceux-ci.

Le tableau ci-dessous permet de comparer les résultats obtenus à l'aide de la vis d'extrudeuse, selon l'invention, lorsqu'elle est alimentée en polyéthylène linéaire et en polyéthylène radicalaire :

| Linéaire | | | Radicalaire | |
|---|---|---|---|---|
| Tours/mn | Débit/H | Amp. | Débit/H | Amp. |
| 50 | 115 | 183 | 102 | 168 |
| 60 | 140 | 195 | 126 | 178 |
| 70 | 185 | 207 | 151 | 195 |
| 80 | 195 | 228 | 178 | 200 |
| 90 | - | - | 191 | 205 |

Dans ce tableau, les débits sont exprimés en Kg/heure et la colonne "Amp." donne l'intensité du courant consommé par le moteur d'entrainement de l'extrudeuse. Ce tableau montre clairement que les résultats sont similaires avec les deux types de polyéthylène.

Il est important de souligner que la vis d'extrudeuse selon l'invention, qu'il s'agisse des portions en hélice ou des turbines, est conformée pour provoquer la progression et le mélange du polyéthylène et non de provoquer son laminage avec reflux partiel du matériau par surverse sur le listel de la vis. Celà est obtenu en particulier grâce au taux de compression réduit qui a été choisi, compris entre 1 et 1,5, et grâce à la structure des mélangeurs à turbine qui sont substitués à des mélangeurs à laminage comme celà a été exposé en liaison avec la description de la figure 1. Ces mélangeurs provoquent effectivement un malaxage des différents composants du mélange à extruder et des différentes portions du mélange à des températures différentes et donc avec des viscosités différentes, mais sans provoquer un refoulement partiel du matériau vers l'arrière par rapport au sens de progression du matériau plastique dans l'extrudeuse.

Un avantage très important procuré par cette forme de vis est que l'absence de laminage du matériau plastique permet d'obtenir des caractéristiques mécaniques exceptionnelles du film réalisé par extrusion.

En radicalaire avec un débit de 240 Kg/heure et une tête d'outil de 160 mm, on obtient, pour un film de 180 microns d'épaisseur, un DART égal à 640. Avec une vis classique, on obtient un débit de 180 Kg/heure et un DART de 440. On rappelle que le DART joint est une unité de mesure de résistance mécanique de film définie par la norme NFT 54-109 ASTM D1789.

En linéaire avec un débit de 195 Kg/heure et une tête d'outil de 220 microns, on obtient un DART égal à 800. Avec une vis classique, on obtient un débit de 120 Kg/heure et un DART de 800.

Selon un mode préféré de réalisation, ledit mélangeur de sortie (56) est constitué par 10 à 16 turbines.

De préférence également, ladite première portion formant hélice (48) a une longueur comprise entre 12 et 16D, D étant le diamètre externe de la vis.

De préférence, sur la périphérie de ladite roue (70), la largeur (a) d'une échancrure (72) est sensiblement égale à celle (b) des parties restantes.

De préférence encore, le taux de compression de la première portion formant hélice (48) est compris entre 1 et 1,33 et en ce que le taux de compression de la deuxième portion formant hélice (54) est égal à 1.

## Revendications

1. Vis pour extrudeuse pour extruder du polyéthylène linéaire et/ou radicalaire, comprenant un arbre (42) sur lequel sont réalisées une première portion en hélice (48), une portion médiane formant un mélangeur intermédiaire (50), une deuxième portion en hélice (54) et une portion terminale formant un mélangeur de sortie (56), caractérisée en ce que l'ensemble desdites portions formant hélice (48, 54) présente un taux de compression compris entre 1 et 1,5.

2. Vis pour extrudeuse selon la revendication 1, caractérisée en ce que ledit mélangeur intermédiaire (50) est constitué par deux à quatre turbines (52, 53).

3. Vis pour extrudeuse selon l'une quelconque des revendications 1 et 2, caractérisée en ce que ledit mélangeur de sortie (56) est constitué par 10 à 16 turbines.

4. Vis pour extrudeuse selon l'une quelconque des revendications 1 à 3, caractérisée en ce que ladite première portion formant hélice (48) a une longueur comprise entre 12 et 160, D étant le diamètre externe de la vis.

5. Vis pour extrudeuse selon l'une quelconque des revendications 2 à 4, caractérisée en ce que chaque mélangeur est constitué par une roue pleine dont la périphérie est munie d'échancrures (72) régulièrement espacées sur ladite périphérie.

6. Vis pour extrudeuse selon la revendication 5, caractérisée en ce que, sur la périphérie de ladite roue (70), la largeur (a) d'une échancrure (72) est sensiblement égale à celle (b) des parties restantes.

7. Vis pour extrudeuse selon la revendication 6, caractérisée en ce que deux roues (70, 74) adjacentes d'un même mélangeur sont angulairement décalées d'un angle correspondant à la largeur (a) d'une échancrure (72).

8. Vis pour extrudeuse selon l'une quelconque des revendications 1 à 7, caractérisée en ce que le taux de compression de la première portion formant hélice (48) est compris entre 1 et 1,33 et en ce que le taux de compression de la deuxième portion formant hélice (54) est égal à 1.

9. Vis pour extrudeuse selon l'une quelconque des revendications 1 à 7, caractérisée en ce que lesdits mélangeurs (50, 56) sont du type n'entraînant pas d'effet de laminage du matériau extrudé.

fig_1

fig_2

fig_3

fig_4

EP 0 487 395 A1

Office européen
des brevets

**RAPPORT DE RECHERCHE EUROPEENNE**

Numero de la demande

EP 91 40 3091

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-0 213 510 (IDEMITSU PETROCHEMICAL CO LTD) <br> * revendications 1-4,9-20; figures 2-8 * <br> --- | 1-8 | B29C47/64 <br> B29C47/60 |
| Y | DE-A-2 311 946 (SIEMENS A.G.) <br> * figures * <br> --- | 1-8 | |
| Y | EP-A-0 186 861 (IDEMITSU PETROCHEMICAL CO LTD) <br> * revendications 1-3,6,7,14; figure 1 * <br> --- | 1-8 | |
| Y | INDUSTRIAL AND PRODUCTION ENGINEERING. <br> vol. 13, no. 3, Septembre 1989, MUNCHEN DE <br> pages 110 - 113; <br> W. LÖW ET AL: 'extruders for polypropylene blow moulding lines' <br> * figure 1 * <br> --- | 1-8 | |
| A | US-A-3 676 034 (R.N. WENDRICKS) <br> * colonne 4, ligne 54 - ligne 60; revendications; figures * <br> --- | 1-8 | |
| A | FR-A-1 251 409 (S.A. DE MATERIEL DE FORAGE SAMAFOR) <br> * le document en entier * <br> --- | 1-8 | DOMAINES TECHNIQUES RECHERCHES (Int. Cl.5) <br><br> B29C |
| A | US-A-4 015 833 (H.T. KIM) <br> * figures * <br> --- | 1-8 | |
| A | DE-A-2 840 478 (G.K.N. WINDSOR GMBH) <br> * figures * <br> --- | 1-8 | |
| A | US-A-3 486 194 (C.E. PARKS) <br> * figures * <br> --- | 1,3-7 | |
| A | US-A-3 904 179 (D.G. CSONGOR) <br> * figures * <br> ----- | 1 | |

Le présent rapport a été établi pour toutes les revendications

| Lieu de la recherche | Date d'achèvement de la recherche | Examinateur |
|---|---|---|
| LA HAYE | 11 FEVRIER 1992 | BELIBEL C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)